(19) Europäisches Patentamt
European Patent Office
Office européen des brevets

(11) **EP 2 040 962 B1**

(12) **EUROPÄISCHE PATENTSCHRIFT**

(45) Veröffentlichungstag und Bekanntmachung des Hinweises auf die Patenterteilung:
**14.05.2014 Patentblatt 2014/20**

(21) Anmeldenummer: **07729443.7**

(22) Anmeldetag: **23.05.2007**

(51) Int Cl.:
***B60T 8/1755*** (2006.01)

(86) Internationale Anmeldenummer:
**PCT/EP2007/055006**

(87) Internationale Veröffentlichungsnummer:
**WO 2008/003554 (10.01.2008 Gazette 2008/02)**

(54) **VERFAHREN ZUM KOMPENSIEREN DER BREMSVERZÖGERUNG BEI EINER FAHRZEUGREGELUNG**

METHOD FOR COMPENSATING THE BRAKING DECELERATION DURING STABILITY CONTROL

PROCÉDÉ POUR COMPENSER LA DÉCÉLÉRATION DE FREINAGE LORS D'UNE RÉGULATION D'UN VÉHICULE

(84) Benannte Vertragsstaaten:
**DE FR GB**

(30) Priorität: **07.07.2006 DE 102006031511**

(43) Veröffentlichungstag der Anmeldung:
**01.04.2009 Patentblatt 2009/14**

(73) Patentinhaber: **Robert Bosch GmbH**
**70442 Stuttgart (DE)**

(72) Erfinder: **ERBAN, Andreas**
**74369 Loechgau (DE)**

(56) Entgegenhaltungen:
WO-A-03/006292    DE-A1- 19 637 193
DE-A1- 19 733 674    DE-C1- 4 418 771
FR-A1- 2 840 577    FR-A1- 2 851 219

EP 2 040 962 B1

**Beschreibung**

Stand der Technik

Die Erfindung betrifft ein Verfahren zum Kompensieren der Bremsverzögerung bei einer Fahrzeugregelung gemäß dem Oberbegriff des Patentanspruchs 1, sowie einen Fahrzeugregler gemäß dem Oberbegriff des Patentanspruchs 11, wie von den Dokumenten FR 2 851 219 A1 und DE 197 33 674 A1 offenbart. Fahrzeugregler, wie z.B. ESP oder ABS, dienen dazu, die Kontrollierbarkeit von Fahrzeugen in kritischen Fahrsituationen, wie z.B. beim Über- oder Untersteuern in Kurvenfahrten zu verbessern. Bei Erkennen einer kritischen Fahrsituation greifen diese Systeme üblicherweise mittels der Fahrzeugbremsen in den Fahrbetrieb ein, um das Fahrzeug zu stabilisieren. Bei einer Kurvenfahrt, in der das Fahrzeug beispielsweise untersteuert, wird durch einen Bremseneingriff am kurveninneren Hinterrad ein zusätzliches Giermoment um die Hochachse des Fahrzeugs erzeugt, das dem Untersteuern entgegen wirkt und das Fahrzeug zurück in Richtung der Kurveninnenseite führt. Bei einem übersteuernden Fahrzeug gilt entsprechendes für das andere Hinterrad.

Jeder automatische Bremseneingriff hat zur Folge, dass das Fahrzeug - zum Teil deutlich - verzögert wird. Dies ist nicht immer gewünscht und kann in bestimmten Fahrsituationen für die Fahrsicherheit von Nachteil sein.

Weitere gattungsgemäßen Fahrzeugregler sind aus den Dokumenten WO 03 006 292 A und DE 19 637 193 A1 bekannt.

Offenbarung der Erfindung

Es ist daher die Aufgabe der vorliegenden Erfindung, ein Fahrzeug-Regelsystem sowie ein entsprechendes Verfahren weiter zu verbessern, mit dem das Fahrzeug im Falle eines automatischen Bremseingriffs in optimierten Weise weniger stark verzögert.

Gelöst wird diese Aufgabe gemäß der Erfindung durch die im Patenanspruch 1 sowie im Patentanspruch 11 angegebenen Merkmale. Weitere Ausgestaltungen der Erfindung sind Gegenstand von Unteransprüchen.

Ein wesentlicher Aspekt der Erfindung besteht darin, das Antriebsmoment an wenigstens einem Rad des Fahrzeugs automatisch anzuheben und dadurch die durch die Bremsregelung bewirkte Verzögerung zumindest teilweise zu kompensieren. Das zusätzliche Antriebsmoment wird dabei vorzugsweise so appliziert, dass ein Giermoment erzeugt wird, welches die stabilisierende Wirkung des automatischen Bremseingriffs unterstützt. Dies hat den wesentlichen Vorteil, dass sich das Fahrzeug schneller stabilisiert und dabei deutlich weniger verzögert. Außerdem wird ermöglicht, dass an den Radbremsen deutlich stärkere Bremsmomente eingestellt werden können - sofern dies aufgrund der Fahrbahnoberfläche möglich ist - und das Fahrzeug somit schneller stabilisiert werden kann.

Bei der Erhöhung des Antriebsmoments muss aus Sicherheitsgründen möglichst verhindert werden, dass das Fahrzeug über die ursprüngliche Geschwindigkeit hinaus beschleunigt. Das Antriebsmoment ist daher vorzugsweise so bemessen, dass die Bremswirkung des Fahrzeugreglers nur teilweise kompensiert und insbesondere nicht überkompensiert wird.

Die Höhe des zusätzlichen Antriebsmoments wird vorzugsweise auf einen Maximalwert begrenzt. Der Maximalwert kann ein fester Wert oder abhängig von einer Fahrzustandsgröße, wie z. B. der Fahrzeuggeschwindigkeit sein. Dadurch kann das Risiko eines Unfalls wegen unangemessener Beschleunigung begrenzt werden.

Die Höhe des zusätzlichen Antriebsmoments ist erfindungsgemäß auch davon abhängig, wie stark das Fahrzeug untersteuert. Bei einem Fahrzeug mit Vorderachsantrieb kann es durch die Erhöhung des Antriebsmoments zu erhöhtem Radschlupf und dadurch zu einer weiteren Destabilisierung des Fahrverhaltens kommen, insbesondere wenn das Fahrzeug untersteuert. Entsprechendes ist auch bei einem Fahrzeug mit Heckantrieb zu berücksichtigen, wenn das Fahrzeug übersteuert. In diesem Fall ist das zusätzliche Antriebsmoment zu reduzieren oder vollständig zu unterdrücken.

Gemäß einer bevorzugten Ausführungsform der Erfindung wird ein Indikator für das aktuelle Fahrverhalten des Fahrzeugs, insbesondere für das Über- oder Untersteuerverhalten des Fahrzeugs, ermittelt und das Antriebsmoment in Abhängigkeit von dieser Kenngröße auf eines oder mehrere Räder aufgebracht. Der Indikator wird vorzugsweise basierend auf der Abweichung der Soll- von der Ist-Giergeschwindigkeit ermittelt. Die Höhe des zusätzlichen Antriebsmoments ist somit abhängig von der Stärke des Über- bzw. Untersteuerns.

Alternativ oder zusätzlich kann eine Sensorik vorgesehen sein, die den Radschlupf an den angetriebenen Rädern überwacht. Wenn der Radschlupf eine vorgegebene Schwelle überschreitet, wird das zusätzliche Antriebsmoment für dieses Rad entsprechend reduziert.

Die Höhe des zusätzlichen Antriebsmoments ist erfindungsgemäß auch eine Funktion der Fahrzeuggeschwindigkeit. Dadurch kann erreicht werden, dass in bestimmten Fahrsituationen, in denen kein oder nur ein geringes zusätzliches Antriebsmoment ausgeübt werden darf, wie z.B. beim Einparken oder bei sehr hohen Fahrgeschwindigkeiten, die Fahrsicherheit nicht gefährdet wird. Gemäß einer bevorzugten Ausführungsform wird die erfindungsgemäße Kompensations-Funktion nur in einem mittleren Geschwindigkeitsbereich ausgeführt. Bei Geschwindigkeiten, die einen vorgegebenen Schwellenwert unterschreiten, sowie Geschwindigkeiten, die einen vorgegebenen Schwellenwert überschreiten, ist die Kompensations-Funktion dagegen vorzugsweise deaktiviert.

Das zusätzliche Antriebsmoment ist vorzugsweise auch eine Funktion der Fahrervorgabe am Fahrpedal. Wenn das vom Fahrer gewünschte Antriebsmoment größer ist als ein vorgegebener Schwellenwert, z.B. 100 Nm, wird das berechnete zusätzliche Antriebsmoment vollständig appliziert. Ist der Fahrerwunsch dagegen kleiner als der Schwellenwert wird das zusätzliche Antriebsmoment mehr und mehr reduziert. Bremst der Fahrer gar, wird vorzugsweise kein zusätzliches Antriebsmoment ausgeübt.

Die erfindungsgemäße Kompensations-Funktion ist vorzugsweise als Software-Algorithmus realisiert, der in einem Steuergerät hinterlegt ist. Der Algorithmus berechnet vorzugsweise ein Motormoment, das vom Antrieb des Fahrzeugs zusätzlich aufgebracht werden soll.

Ein erfindungsgemäßes Fahrzeug-Regelsystem umfasst somit wenigstens ein Steuergerät mit einem Regelalgorithmus, der im Falle einer Bremsregelung ein zusätzliches Antriebsmoment erzeugt, das den Bremseingriff in seiner stabilisierenden Wirkung unterstützt.

Kurze Beschreibung der Zeichnungen

Die Erfindung wird nachstehend anhand der beigefügten Zeichnungen beispielhaft näher erläutert. Es zeigen:

Fig. 1    eine schematische Blockdarstellung eines Fahrzeug-Regelsystems mit einer Funktion zum Anheben des Antriebsmoments im Falle einer Bremsregelung; und

Fig. 2    die wesentlichen Verfahrensschritte eines Verfahrens zum Erzeugen eines zusätzlichen Antriebsmoments bei einer Fahrzeugregelung.

Ausführungsformen der Erfindung

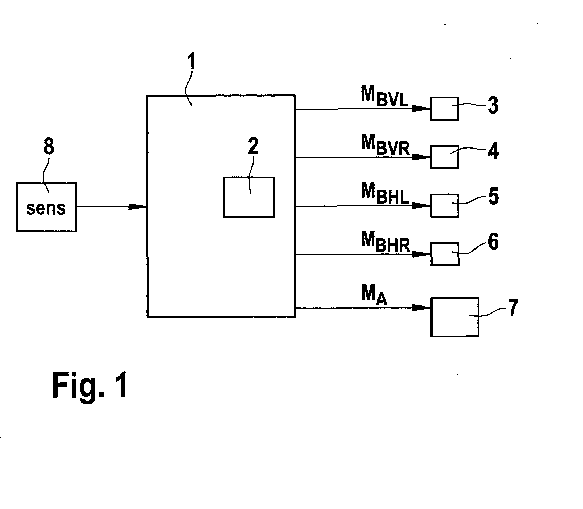

Fig. 1 zeigt eine schematische Blockdarstellung eines Fahrzeug-Regelsystems, das im Falle einer kritischen Fahrsituation, in der das Fahrzeug beispielsweise über- oder untersteuert, einen automatischen Bremseneingriff durchführt und gleichzeitig das Antriebsmoment an wenigstens einem Rad automatisch erhöht. Dadurch kann die Verzögerung aufgrund des Bremseneingriffs wenigstens teilweise kompensiert werden. Darüber hinaus kann der stabilisierende Bremseneingriff deutlich stärker ausgeführt werden, so dass höhere Giermomente erzeugt werden, die das Fahrzeug wesentlich schneller stabilisieren.

Das System umfasst im Wesentlichen ein Steuergerät 1, in dem ein Fahrzeugregler 2, wie z.B. ABS, als Software hinterlegt ist. Das Steuergerät 1 ist mit einer Sensorik 8 verbunden, die den aktuellen Fahrzustand ständig in Bezug auf verschiedene Fahrzustandsgrößen überwacht. Die Sensorik 8 umfasst üblicherweise Rad-Drehzahlsensoren, Beschleunigungssensoren, einen Gierratensensor, etc.. Das Steuergerät 1 ist außerdem mit den Stellgliedern 3-6 der einzelnen Radbremsen und dem Motor-Steuergerät 7 verbunden.

Wenn das Fahrzeug in eine kritische Fahrsituation gerät, in der es beispielsweise über- oder untersteuert, wird dies von der Sensorik 8 erkannt und der Fahrzeugregler 2 erzeugt ein Bremsmoment $M_B$ für die einzelnen Radbremsen. Dadurch wird ein Giermoment um die Hochachse des Fahrzeugs erzeugt, das der Gierbewegung des Fahrzeugs entgegen wirkt. Darüber hinaus erzeugt der Fahrzeugregler 2 ein zusätzliches Antriebsmoment $M_A$ für wenigstens eines der Räder, das die Bremsverzögerung wenigstens teilweise kompensiert. Dieses zusätzliche Antriebsmoment wird - umgerechnet in ein Motormoment - an das Motor-Steuergerät 7 ausgegeben.

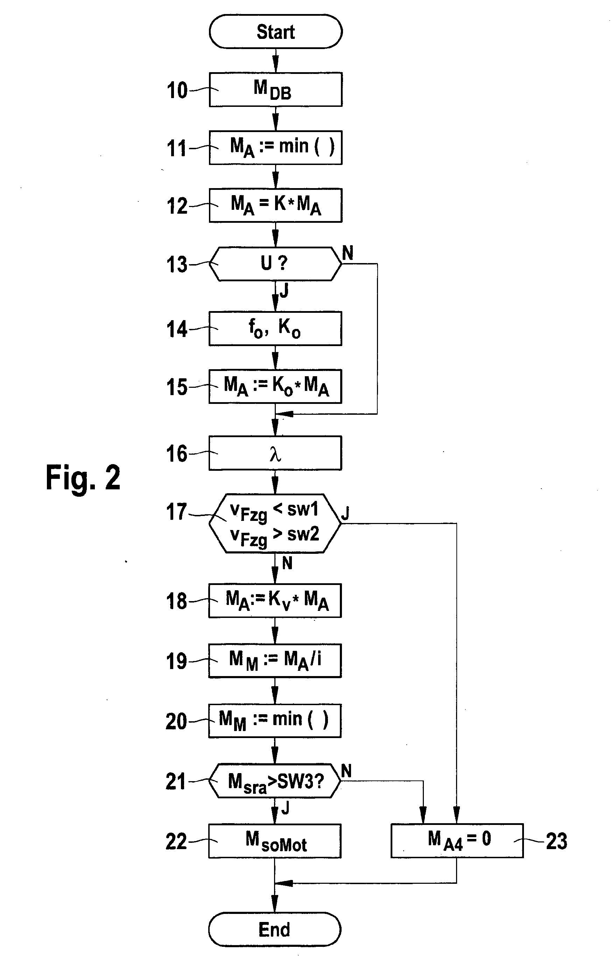

Fig. 2 zeigt die wesentlichen Verfahrensschritte eines Verfahrens zum Ermitteln des zusätzlichen Antriebsmoments $M_A$.

Der automatische Bremseneingriff erzeugt ein Differenzbremsmoment $M_{DB}$ an der Vorderachse und/oder Hinterachse, das eine Änderung des Giermoments um die Hochachse zur Folge hat. Es gilt zunächst:

$$M_{DB\_ist\_VA} = M_{B\_VL} - M_{B\_VR},$$

und

$$M_{DB\_ist\_HA} = M_{B\_HL} - M_{B\_HR},$$

Dabei steht der Index VA für die Vorderachse, HA für die Hinterachse, VL für vorne links, VR für vorne rechts, HL für hinten links und HR für hinten rechts. Das gesamte Differenzbremsmoment $M_{DB\_ist}$, das durch den automatischen Bremseneingriff bewirkt wird, ergibt sich zu:

$$M_{DB\_ist} = M_{DB\_ist\_VA} + M_{DB\_ist\_HA}.$$

Dieses Differenzbremsmoment $M_{DB\_ist}$ soll nun durch ein zusätzliches Antriebsmoment $M_A$ wenigstens teilweise kompensiert werden. Für das zusätzliche Antriebsmoment $M_A$ wird zunächst festgelegt, dass es das Ist-Differenzbremsmoment $M_{DB\_ist}$ oder das Soll-Differenzbremsmoment $M_{DB\_soll}$ nicht übersteigen soll. Dies ist insbesondere in einer Regelphase wichtig, in der das Ist-Differenzbremsmoment $M_{DB\_ist}$ dem Soll-Differenzbremsmoment $M_{OB\_soll}$ nur teilweise oder verzögert folgen kann. Dabei gilt für das zusätzliche Antriebsmoment:

$$M_A = \min (M_{DB\_ist}, M_{DB\_soll}).$$

Vorzugsweise wird noch ein Maximalwert $M_{A\_max}$ für das zusätzliche Antriebsmoment $M_A$ vorgegeben. Für das Antriebsmoment $M_A$ gilt in diesem Fall:

$$M_A := \min (M_A, M_{A\_max})$$

In Schritt 12 wird bestimmt, welcher Anteil des Differenzbremsmoment $M_{DB\_ist}$ durch eine Erhöhung des Antriebsmoments $M_A$ kompensiert werden soll. Dabei gilt:

$$M_A := K * M_A$$

Der Faktor K ist dabei im Bereich zwischen 0...1 zu wählen, wobei ein typischer Wert z.B. 0,7 ist.

Darüber hinaus muss das zusätzliche Antriebsmoment in bestimmten Fahrsituationen, in denen das Fahrzeug beispielsweise plötzlich über- oder untersteuert, weiter reduziert werden, um die Kraftübertragung der angetriebenen Räder nicht zu verschlechtern. Bei einem Hinterrad angetriebenen Fahrzeug wie es in diesem Ausführungsbeispiel angenommen wird, wird zunächst überwacht, ob das Fahrzeug plötzlich übersteuert (Schritt 13). Zu diesem Zweck wird in Schritt 14 ein Übersteuerindikator $f_O$ ermittelt, der eine Funktion der Abweichung der Soll-Moment vom der Ist-Differenzbremsmoment ist. Der Übersteuerindikator $f_O$ ist beispielsweise gleich Null, wenn das Fahrzeug nicht übersteuert und gleich Eins, wenn das Fahrzeug stark übersteuert. Zusätzlich wird ein Abregelfaktor $K_O$ als Funktion des Übersteuerindikators $f_O$ eingeführt. Für das Antriebsmoment $M_A$ wird dann in Schritt 15 folgende Funktion angesetzt:

$$M_A := K_O * M_A$$

Bei Fahrzeugen mit Vorderradantrieb gilt im Falle einer Fahrsituation, in der das Fahrzeug plötzlich stark untersteuert entsprechendes. Bei Allrad angetriebenen Fahrzeugen wird eine Kombination der Maßnahmen von Hinterachs- und Vorderachs angetriebenen Fahrzeugen durchgeführt.

Zusätzlich wird in Schritt 16 der Radschlupf an den angetriebenen Rädern sensorisch überwacht. Wenn der Radschlupf einen vorgegebenen Schwellenwert überschreitet, wird das zusätzliche Antriebsmoment ebenfalls reduziert.

Um die Kompensations-Funktion gegen weitere mögliche Störungen abzusichern, wird sie außerdem auf vorgegebene Geschwindigkeitsbereiche beschränkt.

Dadurch soll insbesondere verhindert werden, dass in bestimmten Fahrsituationen, z.B. wenn der Fahrer einparkt, das Antriebsmoment an einzelnen Rädern unbeabsichtigt erhöht wird. Gleiches gilt auch für Fahrsituationen, in denen das Fahrzeug z.B. mit sehr hoher Geschwindigkeit auf einer Autobahn fährt.

In Schritt 17 wird zunächst überprüft, ob die Fahrzeuggeschwindigkeit kleiner ist als ein vorgegebener erster Schwellenwert SW1 oder größer ist als ein zweiter Schwellenwert SW2. In dem dazwischen liegenden Geschwindigkeitsbereich bleibt die Funktion vorzugsweise vollständig aktiv (Fall N). Liegt die Fahrzeuggeschwindigkeit $V_{Fzg}$ dagegen unterhalb des ersten Schwellenwertes SW1 bzw. oberhalb des zweiten Schwellenwertes SW2 (Fall J) wird die Funktion vorzugsweise vollständig deaktiviert. In diesem Fall gilt: $M_A := 0$.

Ein lineares Erhöhen bzw. Absenken im jeweiligen Übergangsbereich für $M_A$ sichert den Fahrkomfort.

Das bislang berechnete zusätzliche Antriebsmoment $M_A$ beschreibt das Antriebsmoment auf Radebene. Dieses wird in den folgenden Schritten in ein entsprechendes zusätzliches Motormoment $M_M$ umgerechnet. Für das zusätzliche Motormoment $M_M$ gilt zunächst:

$$M_M = M_A/i$$

wobei i das wirksame Momentenübersetzungsverhältnis (Getriebe, Wandler, Differenzial) zwischen Rad und Motor ist. Dieses zusätzliche Motormoment $M_M$ wird in Schritt 20 zusätzlich auf einen Maximalwert begrenzt. Hierbei gilt:

$$M_M = \min(M_M, M_{M\_max}).$$

Dieses zusätzliche Motormoment $M_M$ wird aus Sicherheitsgründen nochmals in Abhängigkeit von der Fahrervorgabe am Fahrpedal (Fahrpedalstellung) modifiziert. Zu diesem Zweck wird wiederum ein Abregelfaktor $K_M$ berechnet. Dieser Faktor ist beispielsweise gleich 1, wenn der Fahrer das Fahrpedal betätigt und dabei ein Antriebsmoment anfordert, das größer als ein vorgegebener Schwellenwert SW3, z.B. 100 Nm, ist. Wenn die Fahrervorgabe dagegen geringer ist als das Mindestmoment, erfolgt eine kontinuierliche Abschwächung bis auf Null. Wenn der Fahrer das Fahrpedal nicht betätigt oder bremst, wird der Abregelfaktor $K_M$ vorzugsweise auf den Wert Null gesetzt. Für das zusätzliche Motormoment $M_M$ gilt somit:

$$M_M := K_M * M_M$$

Oberhalb des Grenzwertes wird das zusätzliche Motormoment $M_M$ vollständig umgesetzt. Sobald der Fahrer bremst oder das Fahrpedal nicht betätigt, oder der Fahrzeugregler 2 inaktiv ist, wird aus fahrdynamischen Gründen und aus Gründen der Sicherheit keine Anhebung des Motormoments erlaubt. In diesem Fall gilt: $M_M=0$.

Die Anhebung des Motormoments $M_M$ wird nun in Schritt 22 noch in Form eines absoluten Soll-Motormoments $M_{somot}$ ausgegeben. Dabei gilt:

$$M_{somot} = min(M_{Mmot}, M_{M\_Fahrer}) + M_M$$

Das Ist-Motormoment wird durch $M_{Mmot}$ berücksichtigt. Dieses Sollmoment $M_{somot}$ kann noch von externen Reglern, wie z.B. einer Antriebsschlupfregelung im Bedarfsfall begrenzt werden.

**Patentansprüche**

1. Verfahren zum Kompensieren der Bremsverzögerung aufgrund einer Fahrzeugregelung, bei der ein Fahrzeugregler (2) durch automatisches Betätigen wenigstens einer Radbremse (3-6) in den Fahrbetrieb eingreift, wobei an wenigstens einem angetriebenen Rad ein zusätzliches Antriebsmoment ($M_A$) ausgeübt wird, so dass die durch den automatischen Bremseingriff erzeugte Verzögerung des Fahrzeugs wenigstens teilweise kompensiert wird, wobei das zusätzliche Antriebsmoment ($M_A$) abhängig davon appliziert wird, wie stark das Fahrzeug untersteuert, **dadurch gekennzeichnet, dass** das zusätzliche Antriebsmoment ($M_A$) abhängig von der Fahrzeuggeschwindigkeit appliziert wird.

2. Verfahren nach Anspruch 1, **dadurch gekennzeichnet, dass** das Antriebsmoment ($M_A$) so ausgeübt wird, dass ein Giermoment erzeugt wird, welches den Bremseneingriff in seiner stabilisierenden Wirkung unterstützt.

3. Verfahren nach Anspruch 1 oder 2, **dadurch gekennzeichnet, dass** das Antriebsmoment ($M_A$) so bemessen ist, dass die durch den automatischen Bremseneingriff erzeugte Verzögerung nicht überkompensiert wird.

4. Verfahren nach Anspruch 1 oder 2, **dadurch gekennzeichnet, dass** das zusätzliche Antriebsmoment ($M_A$) auf einen Maximalwert ($M_{A\_max}$) begrenzt wird.

5. Verfahren nach einem der vorhergehenden Ansprüche, **dadurch gekennzeichnet, dass** das zusätzliche Antriebsmoment ($M_A$) abhängig davon appliziert wird, ob das Fahrzeug über- oder untersteuert.

6. Verfahren nach einem der vorhergehenden Ansprüche, **dadurch gekennzeichnet, dass** das zusätzliche Antriebsmoment ($M_A$) abhängig davon appliziert wird, ob das Fahrzeug per Vorderrad-, Hinterrad- oder Allradantrieb angetrieben wird.

7. Verfahren nach Anspruch 6, **dadurch gekennzeichnet, dass** aus der Abweichung zwischen der Soll-Giergeschwindigkeit und der Ist-Giergeschwindigkeit des Fahrzeugs ein Über- bzw. Untersteuerindikator ($f_O, f_U$) berechnet und das Antriebsmoment ($M_A$) in Abhängigkeit vom Über- bzw. Untersteuerindikator ($f_O, f_U$) ermittelt wird.

8. Verfahren nach einem der vorhergehenden Ansprüche, **dadurch gekennzeichnet, dass** das zusätzliche Antriebsmoment ($M_A$) nur in einem mittleren GeschwindigkeitsBereich aufgebracht wird, nicht jedoch bei geringen Geschwindigkeiten unterhalb eines vorgegebenen ersten Schwellenwerts (SW1) und bei hohen Geschwindigkeiten oberhalb eines zweiten Schwellenwertes (SW2).

9. Verfahren nach einem der vorhergehenden Ansprüche, **dadurch gekennzeichnet, dass** der Radschlupf eines der angetriebenen Räder gemessen und das zusätzliche Antriebsmoment in Abhängigkeit vom gemessenen Radschlupf appliziert wird.

10. Verfahren nach einem der vorhergehenden Ansprüche, **dadurch gekennzeichnet, dass** das zusätzliche Antriebsmoment ($M_A$) in ein Motormoment ($M_M$) umgerechnet und einer Motorsteuerung zugeführt wird.

11. Vorrichtung zum Stabilisieren eines Fahrzeugs in einer Fahrdynamischen Grenzsituation, insbesondere beim Über- oder Untersteuern des Fahrzeugs, **gekennzeichnet durch** eine Elektronik (1) mit einem Fahrzeugregelalgorithmus (2), der zum Durchführen eines der vorstehend beanspruchten Verfahren ausgelegt ist.

12. Vorrichtung nach Anspruch 11, **dadurch gekennzeichnet, dass** die Elektronik (1) ein Steuergerät ist.

**Claims**

1. Method for compensating the braking deceleration owing to a control process of a vehicle, in which a vehicle controller (2) intervenes in the driving operation by automatically activating at least one wheel brake (3-6), wherein an additional drive torque ($M_A$) is applied to at least one driven wheel, with the result that the deceleration of the vehicle which is generated by the automatic braking intervention is at least partially compensated, wherein the additional drive torque ($M_A$) is applied as a function of the extent to which the vehicle is understeered, **characterized in that**
the additional drive torque ($M_A$) is applied as a function of the speed of the vehicle.

2. Method according to Claim 1, **characterized in that** the drive torque ($M_A$) is applied in such a way that a yaw moment is generated which assists the braking intervention in its stabilizing effect.

3. Method according to Claim 1 or 2, **characterized in that** the drive torque ($M_A$) is dimensioned in such a way that the deceleration generated by the automatic braking intervention is not overcompensated.

4. Method according to Claim 1 or 2, **characterized in that** the additional drive torque ($M_A$) is limited to a maximum value ($M_{A\_max}$).

5. Method according to one of the preceding claims, **characterized in that** the additional drive torque ($M_A$) is applied as a function of whether the vehicle oversteers or understeers.

6. Method according to one of the preceding claims, **characterized in that** the additional drive torque ($M_A$) is applied as a function of whether the vehicle is driven by front wheel drive, rear wheel drive or all wheel drive.

7. Method according to Claim 6, **characterized in that** an oversteering or understeering indicator ($F_O$, $f_U$) is calculated on the basis of the deviation between the setpoint yaw speed and the actual yaw speed of the vehicle, and the drive torque ($M_A$) is determined as a function of the oversteering or understeering indicator ($F_O$, $f_U$).

8. Method according to one of the preceding claims, **characterized in that** the additional drive torque ($M_A$) is applied only in an average speed range but not at low speeds below a predefined first threshold value (SW1) and at high speeds above a second threshold value (SW2).

9. Method according to one of the preceding claims, **characterized in that** the wheel slip of one of the driven wheels is measured and the additional drive torque is applied as a function of the measured wheel slip.

10. Method according to one of the preceding claims, **characterized in that** the additional drive torque ($M_A$) is converted into an engine torque ($M_M$) and is fed to an engine controller.

11. Device for stabilizing a vehicle in a movement dynamics boundary situation, in particular when the vehicle is oversteering or understeering, **characterized by** electronics (1) with a vehicle control algorithm (2) which is designed to carry out one of the methods claimed above.

12. Device according to Claim 11, **characterized in that** the electronics (1) are a control device.

## Revendications

1. Procédé de compensation du ralentissement au freinage à l'aide d'une régulation d'un véhicule, dans lequel un régulateur (2) du véhicule intervient dans la situation de roulage par actionnement automatique d'au moins un frein (3-6) de roue,
un couple d'entraînement supplémentaire ($M_A$) étant exercé sur au moins une roue motrice de telle sorte que le ralentissement du véhicule provoqué par l'intervention automatique de freinage soit au moins partiellement compensé,
le couple d'entraînement supplémentaire ($M_A$) étant impliqué selon l'ampleur du sous-virage du véhicule, **caractérisé en ce que**
le couple d'entraînement supplémentaire ($M_A$) est appliqué en fonction de la vitesse du véhicule.

2. Procédé selon la revendication 1, **caractérisé en ce que** le couple d'entraînement ($M_A$) est exercé de manière à former un couple de lacet qui soutient l'effet de stabilisation de l'intervention de freinage.

3. Procédé selon les revendications 1 ou 2, **caractérisé en ce que** le couple d'entraînement ($M_A$) est dimensionné de telle sorte que le ralentissement provoqué par l'intervention automatique sur les freins ne soit pas sur-compensé.

4. Procédé selon les revendications 1 ou 2, **caractérisé en ce que** le couple d'entraînement supplémentaire ($M_A$) est limité à une valeur maximale ($M_{A\_max}$).

5. Procédé selon l'une des revendications précédentes, **caractérisé en ce que** le couple d'entraînement supplémentaire ($M_A$) est appliqué selon que le véhicule est en survirage ou en sous-virage.

6. Procédé selon l'une des revendications précédentes, **caractérisé en ce que** le couple d'entraînement supplémentaire ($M_A$) est appliqué selon que le véhicule est entraîné par entraînement sur les roues avant, sur les roues arrière ou sur toutes les roues.

7. Procédé selon la revendication 6, **caractérisé en ce qu'**un indicateur de survirage ou de sous-virage ($f_o$, $f_u$) est calculé à partir de l'écart entre la vitesse de lacet de consigne et la vitesse de lacet effective du véhicule et **en ce que** le couple d'entraînement ($M_A$) est déterminé en fonction de l'indicateur ($f_o$, $f_u$) de survirage ou de sous-virage.

8. Procédé selon l'une des revendications précédentes, **caractérisé en ce que** le couple d'entraînement supplémentaire ($M_A$) n'est appliqué que dans une plage de vitesse moyenne et ne l'est pas lorsque la vitesse est inférieure à une première valeur de seuil prédéterminée (SW1) ou lorsque la vitesse est supérieure à une deuxième valeur de seuil (SW2).

9. Procédé selon l'une des revendications précédentes, **caractérisé en ce que** le patinage de l'une des roues motrices est mesuré et **en ce que** le couple d'entraînement supplémentaire est appliqué en fonction du patinage mesuré sur la roue.

10. Procédé selon l'une des revendications précédentes, **caractérisé en ce que** le couple d'entraînement supplémentaire ($M_A$) est converti en un couple moteur ($M_M$) et est amené à une commande du moteur.

11. Dispositif de stabilisation d'un véhicule dans une situation limite de dynamique de roulage, en particulier lors d'un survirage ou d'un sous-virage du véhicule, **caractérisé par** une électronique (1) dotée d'un algorithme (2) de régulation du véhicule conçu pour exécuter l'un des procédés revendiqués plus haut.

12. Dispositif selon la revendication 11, **caractérisé en ce que** l'électronique (1) est un appareil de commande.

**Fig. 1**

**Fig. 2**

Start

10 — $M_{DB}$

11 — $M_A := \min(\ )$

12 — $M_A = K * M_A$

13 — U ?  N

J

14 — $f_o,\ K_o$

15 — $M_A := K_o * M_A$

16 — $\lambda$

17 — $v_{Fzg} < sw1$
$v_{Fzg} > sw2$  J

N

18 — $M_A := K_v * M_A$

19 — $M_M := M_A / i$

20 — $M_M := \min(\ )$

21 — $M_{sra} > SW3?$  N

J

22 — $M_{soMot}$

23 — $M_{A4} = 0$

End

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2851219 A1
- DE 19733674 A1

- WO 03006292 A
- DE 19637193 A1